# EUROPEAN PATENT SPECIFICATION

(11) **EP 0 636 447 B1**
(45) Date of publication and mention of the grant of the patent: **24.03.1999**
(21) Application number: 94201750.0
(22) Date of filing: 18.06.1994
(51) Int. Cl.: B23K 20/14, B23K 20/02

(54) **A method of welding a pipe to the wall of a pipe housing seat**
Verfahren zum Schweissen eines Rohres an die Wand eines Rohrengehäusesitzes
Méthode de soudage de tube contre la paroi d'un siège de boîtier de tubes

(30) Priority: 30.07.1993 IT MI931731
(43) Date of publication of application: 01.02.1995
(73) Proprietor: FINMECCANICA S.p.A. AZIENDA ANSALDO, 16128 Genova (IT)
(72) Inventor: Guerreschi, Umberto, I-16128 Genova (IT); Brossa, Mario, I-10126 Torino (IT)
(74) Representative: Perani, Aurelio

(56) References cited:
- GB-A- 2 034 622
- GB-A- 2 203 376
- US-A- 4 620 660
- US-A- 4 934 579
- PATENT ABSTRACTS OF JAPAN vol. 12 no. 36 (M-664) ,3 February 1988 & JP-A-62 187581 (MITSUBISHI HEAVY IND LTD) 15 August 1987,

## Description

The present invention relates to a method of welding the outer surface of a pipe and the wall of a cylindrical housing seat in which the pipe is inserted, a substantially tubular space being defined between the outer surface and the wall.

In order to better define the field of application of the invention, it is useful to point out that it is suitable in particular, but not exclusively, for the manufacture of heat-exchanger elements. The latter are already known and used as components for the transmission of heat in various plants for producing electrical energy; such an element is constituted essentially by a panel which may be plate-shaped or of another geometrical configuration, for example cylindrical, etc., in which cylindrical seats are formed side by side for housing pipes through which a fluid, that depending on the purpose of the plant may be a cooling or a heating fluid, is transported.

An important property required to these heat-exchanger elements is to conduct heat effectively and constantly; in order to satisfy this requirement, the quality of the weld between the pipes for transporting the fluid and the walls of the seats in which they are housed assumes critical importance. Currently, a technique used for producing heat-exchanger elements is that of subjecting the panel with the pipes inserted therein to a brazing process; that is, additional material which is first interposed between the pipe and the wall of its seat, is melted as a result of a heating cycle, giving rise to the joint between the pipe and the wall.

Before continuing further, it is appropriate to state that, in this description and in the claims which follow, the term weld is intended to indicate, in the most general sense, the continuous joint between two elements or surfaces which are disposed side by side and may even be heterogeneous and not solely metallic; as well as the brazing just described, the joint may also be brought about as a result of the local fusion of the elements or surfaces disposed side by side, or by braze-welding, or in some other manner, having regard to the specifications of the Italian standards (UNI) on the subject.

The known technique mentioned above has several disadvantages, however, which make its performance unsatisfactory, particularly when considering the relevance of the uses to which the exchanger elements may be put when, for example, they are used in nuclear technology.

Indeed, amongst the most important disadvantages, it should be noted that, as a result of the heat treatment undergone during the production of the exchanger elements, once the additional material intended for the brasing has melted, it shrinks, giving rise to empty spaces between the pipe and the wall of its seat. This reduces the thermal conductivity of the exchange element due to the presence of empty regions within it and thus decreases its heat-exchanging capacity in comparison with an optimal condition; it is just worth to point out that, in the situation in which heat-exchangers are used, a reduction in their heat-exchanging capacity in comparison with the design conditions may cause considerable danger to the systems of which they are part.

In the past, alternative solutions have been sought to overcome this problem; in some of these, the additional material was disposed in a series of recesses communicating with the cylindrical seats for housing the pipes; however, the results were also unsatisfactory since, as a result of the melting of the additional material, the recesses also had empty regions and, in practice, the same situation arose as occurs with the previous method.

A method of welding together two submerged members by an explosive welding technique is described in GB-A-2034622. Just prior to detonating the explosive, the pressure in a cavity between the two members is reduced at a predetermined value which is known to allow the formation of good welds by explosive welding techniques.

Heat-exchanger elements should, however, be considered only as one particular application of the present invention; indeed, the latter is intended more generally, for all applications in which one or more pipes have to be welded to the walls of corresponding seats, whether they are formed in a panel, as in the case of exchanger elements, or in other items such as, for example, outer pipes for covering those to be welded, as occurs in the manufacture of so-called bimetal pipes.

More generally, the object of the present invention is to produce a weld between the outer surface of a pipe and the wall of a seat for housing the pipe, which has characteristics such as to overcome the problems mentioned with reference to the prior art.

This object is achieved by a method of forming a weld, the operative steps of which are characterized in the claims which will follow.

Further characteristics and the advantages of the invention will become clearer from the description of some embodiments given below by way of non-limiting indication with reference to the appended drawings, in which:
Figure 1 is a perspective view of a heat-exchanger element made with the method of the invention,
Figures 2-3 are sectioned views showing respective embodiments of a step of the method of the invention, applied to the exchange element of Figure 1,
Figure 4 is a longitudinally sectioned view of a bimetal pipe during a step of the invention,
Figure 5 is a transverse section taken on the line V-V of Figure 4.

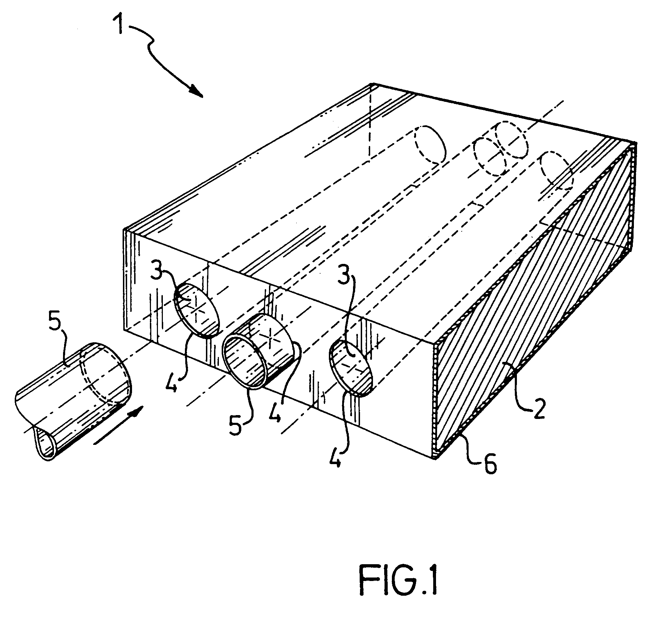

With reference to these drawings and, in particular, to Figure 1, a portion of a heat-exchanger element according to the invention is generally indicated 1; the element portion 1 comprises a plate-shaped panel 2 in which there is a plurality of seats 3 defined by respective cylindrical walls 4 and arranged side by side within the panel 2.

Each of the seats 3 is intended to house a corresponding pipe 5 (for ease of comprehension, Figure 1 shows a first seat 3 still without the respective pipe, a second seat in which an already-inserted pipe is visible, and a third seat in which a pipe to be housed is about to be inserted). Between the outer surface 5a of each pipe 5 and the corresponding cylindrical wall 4 coupled therewith of the seat 3 in which the pipe is housed, a tubular space S is defined, in accordance with the geometrical tolerances of the coupling, which are selected in dependence on various operative parameters; these include the materials of which the pipe 5 and the panel are made and the presence of any additional brazing material, as will become clearer from the following description.

In order to carry out the method of the invention, the fitting of a metal foil 6 for covering the element 1 in which the pipes 5 have been inserted is envisaged; more particularly, the foil 6 is fitted on the element 1 with the pipes inserted in the seats, so as to form a closed casing for isolating the element from the exterior whilst the interiors of the pipes 5 are kept in communication with the surrounding atmosphere to enable the subsequent steps of the method to be carried out.

Once the element 1 has been covered by the foil 6, these steps provide for the casing formed thereby to be evacuated and then sealed.

The former step, that is, the evacuation, is achieved by the suction of the air contained in the casing through a tube 7 extending through the foil 6 and connected to common suction means not shown in the drawings; it will be noted that, in order to create the vacuum, simple welds 8 are formed on the casing between the foil 6 and the ends of the pipes 5 which project from the respective seats 3. The order in which the aforesaid steps take place provides firstly for the formation of the weld 8, and subsequently for the suction of the air, upon completion of which the tube 7, and consequently also the closed casing, are sealed.

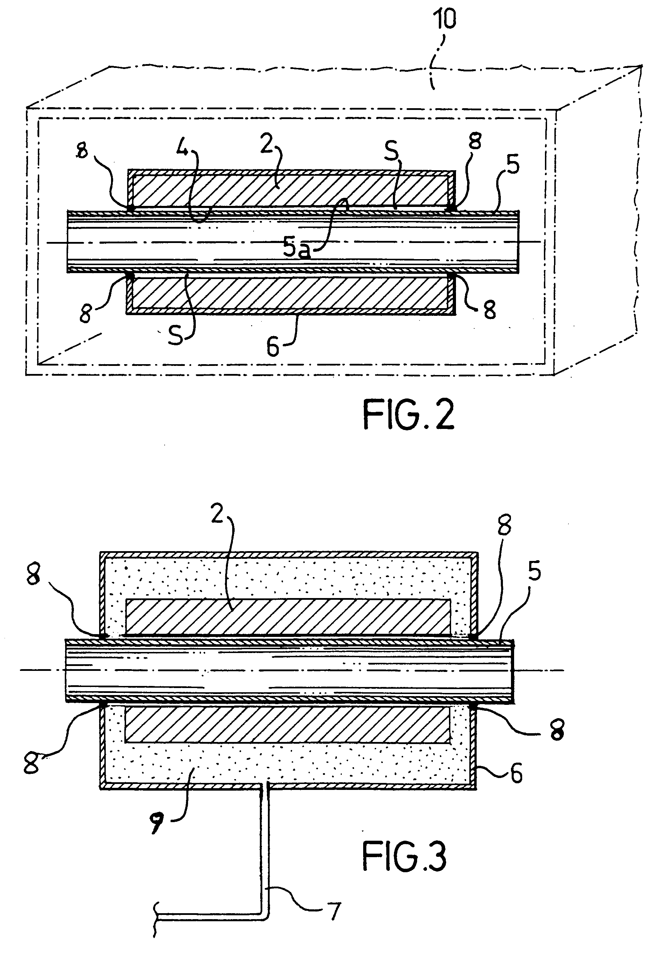

The exchanger element thus prepared is then subjected to a combined heating and pressurization step by treatment with a conventional isostatic press 10; this, which is essentially an oven in which the heating chamber can be pressurized with air or another gas, has been shown only schematically in dash line in Figure 2 and is not therefore described further.

After the combined heating and pressurization steps have been carried out in the isostatic press 10, the method of manufacturing the exchange element 1 may be considered concluded; in fact, the effect of the pressure ensures that the outer surface 5a of the pipe 5, which is made more easily deformable as a result of the heat supplied by the isostatic press, is brought into and kept in close contact with the wall 4, whilst the temperatures to which the pipe is brought cause the coupled surface and the wall to be welded together.

The results achieved by a method according to the invention for forming the weld between the pipe and the wall of a seat for housing the pipe, are remarkable and can be deduced from the embodiment described; in particular, it should be pointed out that the resulting weld is very good quality. Indeed, as a result of the combined effect of the pressurization and of the heating of the pipes 5, the material from which they are made undergoes a plastic deformation and expands radially so that the outer surface of each pipe adheres to the wall of the respective seat and empty spaces cannot be left.

It should also be underlined that, for the purposes of perfect adhesion between the coupled outer surfaces and the walls, the prior step of vacuum-making in the seat of pipes covered by the foil and the sealing thereof, plays a decisive role. Indeed, it must be considered that, if it were not possible to provide vacuum for tubular space S between the outer surfaces 5a and the walls 4 and subsequently to seal it by the application of the casing, the gas under pressure in the isostatic press would diffuse into the space, preventing the pipes from deforming and thus from being welded to the walls 4. Indeed, if these steps of vacuum-making and sealing the space were not provided for, the wall of a pipe would be subjected, locally, to two opposing forces caused by the thrust of the gas under pressure in the isostatic press exerted from both sides of the walls of the pipes.

It should also be noted that, as an alternative to the foregoing, the use of the isostatic press 10 could be considered for making vacuum in the wrapping mentioned; indeed the press could easily be adapted for the depressurization thereof simply by providing it with suitable pumping means to make vacuum in its interior, in addition to the means necessary for its pressurization. In such a case, once the vacuum had been achieved in the isostatic press into which the element 1 had also been introduced, the sealing of the casing could be achieved at ambient temperature within the press. Naturally, in such a case, the steps of the method would not be linked in succession exactly as with the use of the tube 7; in fact, by operating under vacuum in the press 10, it could be considered of fitting the foil 6 in these conditions and then, afterwards, sealing the wrapping formed thereby directly.

Another considerable advantage resulting from the carrying out of the method described above is that it enables the element in which the seat for housing the pipe is formed, which, in this case, is constituted by the panel 2, to be stressed in a balanced manner. In fact, the pressure exerted by the gas in the isostatic press clearly acts uniformly both inside the pipes, expanding them, and outside the wrapping, compensating for the stresses to which the panel 2 is subject. This characteristic of the invention thus makes it particularly suitable if the panel is made of fragile materials such as the ceramic materials or graphite which are frequently used in heat-exchanger elements. It will also be noted that the simplicity and flexibility of the method of the invention enables the deformation of the pipes to be controlled very well, ensuring that the weld is always very good; in fact by altering the basic parameters of the process, that is, the pressurization pressure, the heating temperature and the time for which these are applied, complete control of the deformation of the pipe and hence of the weld can be achieved.

Another important result which is achieved by the invention and which should be pointed out is that of enabling the desired weld to be carried out for several pipes simultaneously; in other words, it suffices to observe that, in the embodiment just described, the fixing of one pipe 5 in its seat takes place simultaneously with the analogous fixing of the other pipes, and thus without the need to carry out the various operative steps of the welding on one pipe at a time. Clearly, this characteristic radically reduces production times with considerable savings, particularly for heat-exchange elements in which there are generally many pipes to be welded. Naturally, modifications and variations may be applied to the embodiment of the method described above, particularly with regard to the fact that, as disclosed above, the invention may be used effectively whenever there is a need to weld even a single pipe to the wall of a corresponding seat such as, for example, in the case of the manufacturing of bimetal pipes.

Incidentally, bimetal pipes are particular pipes which are generally formed with an internal portion of one metal and an external portion of another one; these portions, which are tubular and coaxial, are provided mainly for economic reasons since the fluid circulating in the pipe frequently has chemical characteristics such as to require the use of a special, and thus expensive, metal or alloy. This is the reason for the split structure of the pipe, only the internal portion being formed of the special metal.

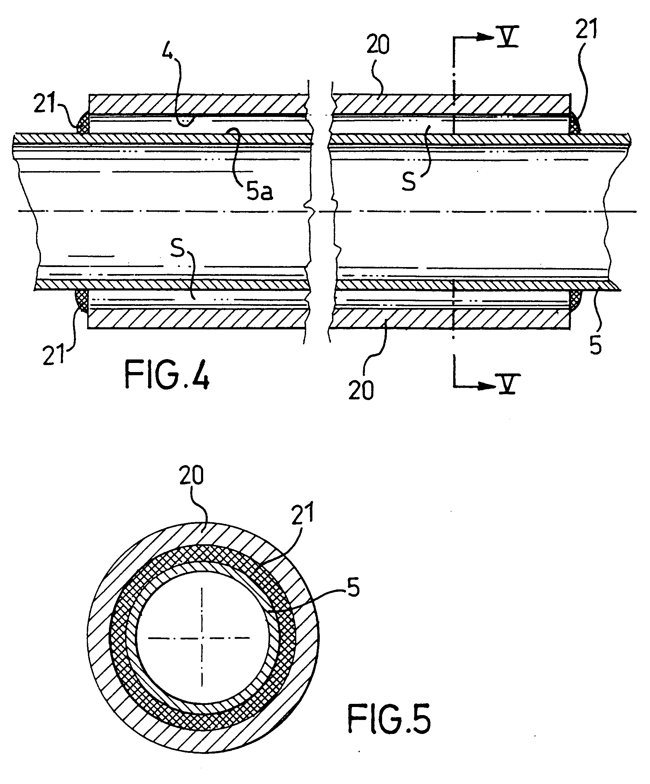

In order to further explain the invention, an embodiment of the method applied in the case of a single pipe 5 to be welded to a corresponding seat 3 formed as a second, outer pipe 20 to produce the bimetal pipes already mentioned, will be described below with reference to Figures 4 and 5. In this second embodiment, elements structurally and functionally equivalent to those already described above will retain the same reference numerals and will not therefore be specified further.

For the welding of a single pipe 5, the fitting of a metal cover plate such as that already seen would be excessive and the foil can therefore advantageously be replaced by a pair of annular sealing beads 21 applied to the ends of the pipe 5 once in the space S between the outer surface 5a and the wall 4 vacuum has been made.

These beads 21 which, in this embodiment, are formed by welding, have the effect of sealing the space S defined between the outer surface 5a and the wall 4 of the seat 3; as seen above, in this embodiment of the method, the pipes 5 and 20 thus arranged are treated in the isostatic press 10, which pressurizes them and heats them to achieve the desired weld as a result of the expansion of the pipe 5.

Naturally, this second embodiment of the invention may be modified, particularly as regards the sealing of the space S; in fact the beads 21 mentioned could clearly equally well be replaced by rubber sealing rings or the like.

The results of the invention can be further explained by a comparative analysis of this second embodiment of the invention with the previous one.

In fact, as far as the quality of the weld between the outer surface of a pipe and the wall of the corresponding seat is concerned, there are no substantial differences, since the welding takes place on the basis of the same principles (providing vacuum in the space S and its sealing, the heating and pressurization of the pipe in its seat); the versatility and flexibility of the method of the invention should, however be underlined; this particular advantageous aspect can be understood better by comparing the operative aspects of the two embodiments described above.

In general, it can be seen that with the present method, it is possible to form the weld either for a single pipe or for a plurality of pipes; but, more particularly, it is worth to point out that one could consider welding a plurality of bimetal pipes simultaneously, by proceeding in a manner similar to that shown in the first embodiment. In other words, one could consider replacing the weld beads 21 and covering a bundle of bimetal pipes to be welded with the metal plate 6, thus recreating the conditions already described. However, it worth observing that, in such a case, the metal foil would itself constitute a means for keeping the pipes together, as well as an element necessary for the sealing; thus, this draws attention to the fact that, in the first embodiment which applies to a heat-exchanger element, the panel 2 constitutes essentially a structural support in which the seats 3 for the pipes to be welded are formed and supported close together. It is thus clear that a similar structural element for supporting the seats could be produced in another way, that is, it need not necessarily be in the form of a panel; one could therefore consider replacing it with a structure suitable for supporting a plurality of bimetal pipes side by side, the pipes, for example, simply being supported so that they could subsequently be covered with the metal foil according to the aforementioned teaching.

Moreover, with reference to Figure 3, to facilitate the preparation of the casing with the metal foil 6, it would be possible to interpose inert material 9, which could be sand or another granular material, between the foil and the pipes 5 inserted in the corresponding seats 3 which, in this case are formed in the panel 2; the presence of the inert material would not, however, substantially alter the steps described above of which the inventive method consists.

To continue with an examination of other possible variants with respect to those considered up to now, it should be pointed out that the appended drawings show portions of pipe inserted in corresponding seats; it is, however, intended that the method of the invention could equally well be used in cases where the portions shown belong to a single coiled pipe, such as, for example, the pipe for the circulation of fluid in a finned battery. In this case, it could perhaps more correctly be referred about a method of welding portions of a pipe to the walls of respective cylindrical mounting seats; however, this variant would also fall within the inventive concept defined by the claims which follow the present description.

It is also clear from this observation and from the context of the description given up to now that the method of the invention may equally well also be carried out when additional material is interposed between the outer surface of a pipe and the wall of the corresponding seat to form a joint by brazing or braze-welding between the pipe and the wall. In fact this would involve providing vacuum and sealing of the space S in which the brazing material would be inserted beforehand.

Finally, it seems appropriate to add, with reference to the definition of the weld given at the beginning of this description, that the materials constituting the seats 3 and the pipes 5 to be welded may be heterogeneous, that is, the materials could be ceramic or graphite for the panel and metal for the pipes. In this case, the method of the invention could still be carried out, possibly with the use of special additional materials to enhance the welding of the surfaces to be connected. It should also be pointed out that the presence or lack of additional material interposed between the pipe and the wall, like the diversity of the materials welded, can affect the shape of the space S defined between them; in other words, this space which, in the embodiments described above, was substantially a tubular space, could also assume different geometrical shapes, since it is only necessary to be useful for making vacuum and sealing it to achieve the results pointed out above.

## Claims

1. A method of welding the outer surface (5a) of a pipe (5) and the wall (4) of a cylindrical housing seat (3) in which the pipe is inserted, a substantially tubular space (S) being defined between the outer surface (5a) and the wall (4), the method comprising the steps of:
- providing vacuum in the space (S), and sealing it,
- bringing about combined heating and internal pressurization of the pipe (5), thereby producing the weld as a result of the plastic deformation of the pipe (5) by the combined effect of the heating and the pressurization brought about,
characterized in that
the heating and pressurization of the pipe (5) are brought about in an isostatic press (10).

2. A method of welding outer surfaces (5a) of a plurality of pipes (5) and corresponding walls (4) of respective housing seats (3) in which the pipes (5) are inserted, respective substantially tubular spaces (S) being defined between the outer surfaces (5a) and the corresponding walls (4), characterized in that it comprises the following operative steps:
- covering the pipes (5) and the seats (3) in which they are inserted, externally, with a metal foil (6), forming a wrapping which covers the pipes (5) and the seats (3), leaving the pipes (5) internally in communication with the exterior,
- providing vacuum in the wrapping formed by the foil (6) and sealing it,
- bringing about combined heating and internal pressurization of said pipes (5) and seats (3) covered by said foil (6) by means of an isostatic press (10), thereby producing the weld as a result of the plastic deformation of the pipes (5) by the combined effect of the heating and the pressurization.

3. A method according to Claim 2, characterized in that the seats (4) are formed in a panel (2).

4. A method according to Claim 2 or 3, characterized in that inert material (9) is interposed between the foil (6) and the plurality of seats (3) with the pipes (5) inserted therein.

5. A method according to any one of the preceding claims, characterized in that additional brazing material is interposed in the space (S) defined between the outer surface (5a) of at least one pipe (5) and the wall (4) of the corresponding seat (3) for housing the pipe (5).

## Patentansprüche

1. Verfahren zum Verschweißen der Außenfläche (5a) eines Rohrs (5) und der Wand (4) einer zylindrischen Gehäuseaufnahme (3), in die das Rohr eingeführt ist, wobei ein im wesentlichen röhrenförmiger Zwischenraum (S) zwischen der Außenfläche (5a) und der Wand (4) ausgebildet ist, wobei das Verfahren die folgenden Schritte umfaßt:
- Herstellen eines Vakuums in dem Zwischenraum (S) und Abdichten desselben,
- kombiniertes Einwirken von Wärme und Innendruck auf das Rohr (5) um so die Verzchweißung als Ergebnis der plastischen Verformung des Rohrs (5) durch die kombinierte Wirkung der Warme und des Drucks herzustellen,
**dadurch gekennzeichnet**, daß:
das Rohr(5) in einer isostatischen Presse (10) Wärme und Druck ausgesetzt wird.

2. Verfahren zum Verschweißen von Außenflächen (5a) einer Vielzahl von Rohren (5) und entsprechender Wände (4) entsprechender Gehäuseaufnahmen (3), in die die Rohre(5) eingeführt sind, wobei entsprechende, im wesentlichen röhrenförmige Zwischenräume (S) zwischen den Außenflächen (5a) und den entsprechenden Wänden (4) ausgebildet sind, **dadurch gekennzeichnet**, daß es die folgenden Verfahrensschritte umfaßt:
- Abdecken der Rohre (5) und der Aufnahmen (3), in die sie eingeführt sind, von außen mit einer Metallfolie (6), die eine Umhüllung bildet, die die Rohre (5) und die Aufnahmen (3) abdeckt, wobei die Rohre (5) im Inneren weiterhin mit der Außenumgebung in Verbindung stehen,
- Herstellen eines Vakuums in der durch die Folie (6) gebildeten Umhüllung und Abdichten derselben,
- gleichzeitiges Einwirken von Wärme und Innendruck auf die Rohre (5) und die Aufnahmen (3), die mit der Folie (6) abgedeckt sind, in einer isostatischen Presse (10), um so die Verschweißung als Ergebnis der plastischen Verformung der Rohre (5) durch die kombinierte Wirkung der Wärme und des Drucks herzustellen,

3. Verfahren nach Anspruch 2, **dadurch gekennzeichnet**, daß die Aufnahmen (4) in einer Tafel (2) ausgebildet sind.

4. Verfahren nach Anspruch 2 oder 3, **dadurch gekennzeichnet**, daß inertes Material (9) zwischen die Folie (6) und die Vielzahl von Aufnahmen (3) eingefüllt wird, wobei die Rohre (5) darin eingeführt sind.

5. Verfahren nach einem der vorangehenden Ansprüche, **dadurch gekennzeichnet**, daß zusätzliches Hartlötmaterial in den Zwischenraum (S) eingefüllt wird, der zwischen der Außenfläche (5a) wenigstens eines Rohrs (5) und der Wand (4) der entsprechenden Aufnahme (3) ausgebildet ist, die das Rohr (5) aufnimmt.

## Revendications

1. Procédé consistant à souder la surface extérieure (5a) d'un tube (5) et la paroi (4) d'un logement cylindrique (3) dans lequel le tube est inséré, un espace (S) substantiellement tubulaire étant défini entre la surface extérieure (5a) et la paroi (4), le procédé comprenant les étapes qui consistent à :
- faire le vide dans l'espace (S), et le fermer hermétiquement,
- occasionner le chauffage et la mise sous pression interne combinés du tube (5), produisant de ce fait la soudure en conséquence de la déformation plastique du tube (5) sous l'effet combiné du chauffage et de la mise sous pression occasionnés,
caractérisé en ce que
le chauffage et la mise sous pression du tube (5) sont occasionnés dans une presse isostatique (10).

2. Procédé consistant à souder les surfaces extérieures (5a) d'une pluralité de tubes (5) et les parois (4) correspondantes des logements (3) respectifs dans lesquels les tubes (5) sont insérés, des espaces (S) substantiellement tubulaires respectifs étant définis entre les surfaces extérieures (5a) et les parois (4) correspondantes, caractérisé en ce qu'il comprend les étapes opérationnelles suivantes :
- recouvrir les tubes (5) et les logements (3) dans lesquels ils sont insérés, à l'extérieur, d'une feuille métallique (6), formant un enveloppage qui recouvre les tubes (5) et les logements (3), laissant les tubes (5) à l'intérieur en communication avec l'extérieur,
- faire le vide dans l'enveloppage formé par la feuille (6) et le fermer hermétiquement,
- occasionner le chauffage et la mise sous pression combinés desdits tubes (5) et logements (3) recouverts de ladite feuille (6) au moyen d'une presse isostatique (10), produisant de ce fait la soudure en conséquence de la déformation plastique des tubes (5) sous l'effet combiné du chauffage et de la mise sous pression.

3. Procédé selon la revendication 2, caractérisé en ce que les logements (4) sont formés dans un panneau (2).

4. Procédé selon la revendication 2 ou 3, caractérisé en ce qu'un matériau inerte (9) est intercalé entre la feuille (6) et la pluralité de logements (3) avec les tubes (5) insérés en leur sein.

5. Procédé selon l'une quelconque des revendications précédentes, caractérisé en ce qu'un matériau de brasage supplémentaire est intercalé dans l'espace (S) défini entre la surface extérieure (5a) d'au moins un tube (5) et la paroi (4) du logement (3) correspondant destiné à loger le tube (5).
